# EUROPÄISCHE PATENTSCHRIFT

(11) **EP 2 728 156 B1**
(45) Veröffentlichungstag und Bekanntmachung des Hinweises auf die Patenterteilung: **29.11.2017**
(21) Anmeldenummer: 13183295.8
(22) Anmeldetag: 06.09.2013
(51) Int. Cl.: F02M 26/21, F02M 26/64, F02M 26/70, F16K 11/052

(54) **Regelvorrichtung für eine Verbrennungskraftmaschine**
Control device for a combustion engine
Dispositif de réglage pour un moteur à combustion interne

(30) Priorität: 06.11.2012 DE 102012110590
(43) Veröffentlichungstag der Anmeldung: 07.05.2014
(73) Patentinhaber: Pierburg GmbH, 41460 Neuss (DE)
(72) Erfinder: Bronischewski, Bernhard, 47829 Krefeld (DE)
(74) Vertreter: Patentanwälte ter Smitten Eberlein-Van Hoof Rütten Partnerschaftsgesellschaft mbB

(56) Entgegenhaltungen:
- WO-A2-2011/130015
- DE-A1- 2 232 705
- DE-A1- 2 703 687
- DE-A1- 2 851 180
- DE-A1-102009 031 535
- JP-U- S4 816 238

## Beschreibung

Die Erfindung betrifft eine Regelvorrichtung für eine Verbrennungskraftmaschine mit einem Ansaugkanalgehäuse, in dem ein Ansaugkanal ausgebildet ist, dessen Durchströmungsquerschnitt mittels einer ersten Klappe regelbar ist, einem Abgasrückführkanalgehäuse, in dem ein Abgasrückführkanal ausgebildet ist, der in den Ansaugkanal mündet und dessen Durchströmungsquerschnitt mittels einer zweiten Klappe regelbar ist, wobei die erste Klappe und die zweite Klappe miteinander verbunden um eine gemeinsame Drehachse drehbar gelagert sind, wobei die den Abgasrückführkanal beherrschende zweite Klappe im Abgasrückführkanalgehäuse gelagert ist und einen Klappenkörper und eine als Drehachse dienende Welle aufweist, wobei die den Ansaugkanal beherrschende erste Klappe auf dem Klappenkörper der zweiten Klappe befestigt ist.

Regelvorrichtungen werden in Verbrennungskraftmaschinen genutzt, um Abgas- oder Luftmengen zu regeln, die abgeführt oder der Verbrennung zugeführt werden sollen. Auch Kombinationen dieser Regelventile, bei denen zwei Ventilkörper über eine gemeinsame Stellvorrichtung betätigt werden, sind bekannt. Auch eine Kombination eines Abgasrückführventils mit einer Drosselklappe ist bekannt. Bei dieser Kombination mündet der Abgasrückführkanal unmittelbar stromabwärts des Drosselventils in den Ansaugkanal. Bei gewünschter Erhöhung der Abgasrückführrate wird dann mit Öffnen des Abgasrückführventils in gleichem Maße die Drosselklappe geschlossen, was eine Erhöhung des Druckgefälles im Abgasrückführkanal zur Folge hat. Eine derartige Anordnung wird beispielsweise in der DE 27 03 687 A1 offenbart.

Bekannt sind auch einzelne Ventile, die derartig angeordnet werden, dass sie in ihrer ersten Endstellung den Abgasrückführkanal und in ihrer anderen Endstellung zumindest teilweise den Ansaugkanal verschließen. Ein derartiges Niederdruckabgasrückführsystem wird beispielswiese in der WO 2011/048540 A1 beschrieben.

Durch diese bekannten Anordnungen wird zwar eine gute Regelung des Abgasrückführsystems bei Minimierung der Kosten und Bauteile erreicht, jedoch sind die bekannten Ventile in der Genauigkeit ihrer Regelung vor allem bei kleinen Öffnungswinkeln des Abgasrückführventils eingeschränkt. Die stetig wachsenden Anforderungen an die Genauigkeit der zu regelnden Gasmengen zur Einhaltung der Schadstoffnormen hat dazu geführt, dass verschiedene Ansätze bekannt geworden sind, mit denen auch bei geringen Öffnungsquerschnitten der Klappen beziehungsweise der Ventile eine möglichst exakte Mengenregelung erreicht werden soll.

So wird in der DE-OS 29 01 703 eine Regelvorrichtung mit einem Luftansaugkanal und einem in diesen Kanal mündenden Abgasrückführkanal beschrieben, bei dem ein Klappenkörper exzentrisch an einer in dem Kanal bildenden Gehäuse gelagerten Welle befestigt ist. Bei Drehung der Welle wird der Durchströmungsquerschnitt des einen Kanals geöffnet, während der des jeweils anderen Kanals geschlossen wird. Um eine möglichst genaue Regelung des zurückgeführten Abgasstromes zu gewährleisten, ist an der zum Abgasrückführkanal gerichteten Seite des Klappenkörpers ein Reduzierkörper ausgebildet, der den freien Durchströmungsquerschnitt bei geringen Öffnungswinkeln des Abgasrückführkanals im Vergleich zu einer Verwendung des reinen Klappenkörpers verringert und so die Regelbarkeit verbessern soll.

Auch aus der WO 2011/130015 A1 ist eine kombinierte Drossel- und Abgasrückführklappe bekannt, bei der der Drosselklappenkörper auf der Abgasrückführklappe befestigt ist. Bei Drehung der Abgasrückführklappe wird der Ansaugkanal in dem Maße geöffnet wie der Abgasrückführkanal geschlossen wird. Ein Verschluss des Ansaugkanals ist nicht möglich.

Die Wiedergabe einer genauen Regelkennlinie ist mit einer derartigen Regelvorrichtung jedoch nur sehr schwierig möglich, da die entsprechende Form des an der Klappe befestigten Körpers sehr aufwendig zu berechnen und herzustellen wäre.

Es ist daher Aufgabe der Erfindung, eine Regelvorrichtung für eine Verbrennungskraftmaschine zu schaffen, mit der eine möglichst genaue Regelbarkeit eines Gasstromes auch bei kleinen Öffnungsquerschnitten entsprechend einer vorgegebenen Kennlinie erreicht werden kann. Dabei sollten möglichst einfach herzustellende Bauteile verwendet werden, um die Herstellkosten gering zu halten.

Diese Aufgabe wird durch eine Regelvorrichtung für eine Verbrennungskraftmaschine mit den Merkmalen des Hauptanspruchs gelöst.

Dadurch, dass die den Abgasrückführkanal beherrschende zweite Klappe im Abgasrückführkanalgehäuse gelagert ist und einen Klappenkörper sowie eine als Drehachse dienende Welle aufweist, wobei die den Ansaugkanal beherrschende erste Klappe auf dem Klappenkörper der zweiten Klappe befestigt ist, erfolgt die Regelung des Abgasstroms im Wesentlichen wie bei üblichen Schmetterlingsventilen. Diese weisen bereits eine recht genaue Regelbarkeit der Gasmassenströme auf. Zusätzlich wirkt die dem Ansaugkanal zuzuordnende erste Klappe bei kleinen Öffnungswinkeln als zusätzlicher Strömungswiderstand, was Volumenstromsprünge bei kleinen Öffnungswinkeln zuverlässig vermeidet. So ist es möglich, durch entsprechende Ausformung der ersten Klappe eine konkav steigende Kennlinie zu erzeugen. Dadurch, dass das Ansaugkanalgehäuse einen Rohrabschnitt aufweist, der sich teilweise über die Mündung des Abgasrückführkanals erstreckt, wobei der Regelkörper der ersten Klappe zum Verschließen des Ansaugkanals in den Rohrabschnitt des Ansaugkanalgehäuses eintaucht, wird eine vollständige Regelbarkeit des Luftstroms ermöglicht. Dies kann beispielsweise durch Einsetzen eines Rohres in das Gehäuse erfolgen. So werden im geschlossenen Zustand des Abgasrückführventils Strömungsverluste des Luftstroms reduziert und im teilweise geöffneten Zustand eine wiederum Druckverluste fördernde senkrechte Einleitung des Abgasstroms in den Luftstrom von der bezüglich des Luftstroms stromaufwärtigen Klappenseite des zweiten Klappenkörpers vermieden. So wird auch die Regelbarkeit des Abgasrückführstroms verbessert. Es wird ein weitestgehend umlaufender Spalt für den Regelkörper des zweiten Klappenkörpers zum umgebenden Rohrabschnitt erzeugt, so dass durch entsprechende Ausformung der Innenwand des Rohrabschnitts ebenfalls eine gewünschte Kennlinie für kleine Öffnungswinkel des Regelkörpers erzeugt werden kann.

Vorzugsweise weist die erste Klappe einen Regelkörper zur Regelung des Durchströmungsquerschnitts des Ansaugkanals und einen Befestigungsabschnitt auf, über den der Regelkörper beabstandet zum Klappenkörper am Klappenkörper befestigt ist. Durch diesen Abstand des Klappenkörpers des Abgasrückführventils und des Regelkörpers der Drosselklappe kann die Lagerung und Welle des Abgasrückführventils beabstandet zur Einleitstelle des Abgases in den Ansaugkanal angeordnet werden. Dies hat zur Folge, dass die Regelung in einem Kanalabschnitt erfolgt, der durch allseitig umlaufende Wände begrenzt ist. Dies verbessert die Regelbarkeit des Abgasrückführventils deutlich, da plötzliche Öffnungsquerschnittssprünge in den Ansaugkanal vermieden werden.

In einer bevorzugten Ausführungsform erstreckt sich der Regelkörper im Wesentlichen parallel zum Klappenkörper. Bei einer üblichen 90° Einleitung des Abgases wird so ein vollständiger Verschluss des jeweils einen Kanals bei vollständiger Öffnung des jeweils anderen Kanals erreicht.

Eine besonders gute Regelbarkeit des Abgasmassenstroms ergibt sich, wenn der Klappenkörper in der den Durchströmungsquerschnitt des Abgasrückführkanals verschließenden Stellung einen Winkel von 75 bis 85° zur Mittelachse des Abgasrückführkanals einschließt. Diese leichte Schräglage an der Kanalwand führt dazu, dass beim Öffnen aus dieser Position bei Drehung der Welle beispielsweise um 1° ein geringerer Querschnitt geöffnet wird als bei einer Öffnung aus der zur Kanalachse senkrechten Position. Des Weiteren ist ein dichter Verschluss des Kanals leichter zu verwirklichen, da der Klappenumfang im geschlossenen Zustand des Abgasrückführkanals gegen die umliegenden Innenwände anliegen kann.

Des Weiteren schließt vorzugsweise ein zur Mündung des Abgasrückführkanals stromabwärtiger Wandabschnitt des Ansaugkanalgehäuses zur Mittelachse des Ansaugkanals einen Winkel von 5 bis 15° ein und ist derart ausgeformt, dass er eine Tasche zur Aufnahme des Regelkörpers der ersten Klappe bei Verschluss des Abgasrückführkanals bildet. So kann trotz der parallelen Ausbildung des Regelkörpers und des Klappenkörpers bei gleichzeitig angestelltem Schließwinkel des Klappenkörpers eine freie Durchströmung des Ansaugkanals bei geschlossenem Abgasrückführventil erreicht werden, da keine Strömungshindernisse im Ansaugkanal angeordnet sind.

Vorzugsweise ist im Rohrabschnitt am zum Abgasrückführkanal weisenden Umfangsbereich eine Ausnehmung ausgebildet, in der der Befestigungsabschnitt im verschlossenen Zustand des Ansaugkanals zumindest teilweise angeordnet ist. So kann ein Eintauchen des Regelkörpers zur genauen Luftmassenstromregelung ermöglicht werden und dennoch ein Abstand zwischen dem Regelkörper und dem Klappenkörper vorhanden sein.

In einer besonders günstigen Ausführung sind die erste Klappe und der Klappenkörper der zweiten Klappe einstückig hergestellt, so dass Montagekosten zur Befestigung entfallen.

Es wird somit eine Regelvorrichtung geschaffen, mit der sowohl der Luftmassenstrom im Ansaugkanal als auch der Abgasmassenstrom des Abgasrückführkreises auch bei kleinen Öffnungswinkeln der Ventile sehr genau entlang einer gewünschten Kennlinie regelbar ist. Dabei wird lediglich ein Aktor für beide Ventile benötigt. Auch ist lediglich eine Lagerung erforderlich. Diese Regelvorrichtung ist kostengünstig herstell bar.

Ein Ausführungsbeispiel einer erfindungsgemäßen Regelvorrichtung ist in den Figuren dargestellt und wird nachfolgend beschrieben.
Die Figur 1 zeigt eine Seitenansicht einer erfindungsgemäßen Regelvorrichtung mit geschlossenem Abgasrückführkanal in geschnittener Darstellung.
Die Figur 2 zeigt eine Seitenansicht der erfindungsgemäßen Regelvorrichtung aus Figur 1 mit teilweise geöffnetem Abgasrückführkanal in geschnittener Darstellung.
Die Figur 3 zeigt eine Seitenansicht der erfindungsgemäßen Regelvorrichtung aus Figur 1 mit geschlossenem Ansaugkanal in geschnittener Darstellung.
Die Figur 4 zeigt eine perspektivische Seitenansicht der erfindungsgemäßen Regelvorrichtung gemäß den Figuren 1 bis 3 mit teilweise geöffneten Kanälen in aufgeschnittener Darstellung.

Die erfindungsgemäße Regelvorrichtung besteht aus einem Abgasrückführkanalgehäuse 10 und einem Ansaugkanalgehäuse 12. Das Ansaugkanalgehäuse 12 verläuft im Wesentlichen in gerader Richtung, während das Abgasrückführkanalgehäuse 10 senkrecht in das Ansaugkanalgehäuse 12 mündet. Im vorliegenden Ausführungsbeispiel ist das Abgasrückführkanalgehäuse 10 einstückig mit einem stromabwärtigen Gehäuseteils 14 des Ansaugkanalgehäuses 12 ausgebildet. Dieses Gehäuse 10, 14 weist eine Öffnung 16 auf, in die ein Rohrabschnitt 18 gesteckt ist, der einen stromaufwärtigen Abschnitt des Ansaugkanalgehäuses 12 bildet. Über einen Flansch 20 ist der Rohrabschnitt 18 am Abschnitt 14 befestigt.

Der Rohrabschnitt 18 und der Abschnitt 14 begrenzen einen Ansaugkanal 22, in den ein Abgasrückführkanal 24 mündet, der durch das Abgasrückführkanalgehäuse 10 umfänglich begrenzt ist.

Der Rohrabschnitt 18 ragt bis kurz vor eine Mittelachse 26 des Abgasrückführkanals 24, so dass eine bezüglich des Luftstroms stromaufwärtige Hälfte 44 des Abgasrückführkanals 24 an dessen Mündung 28 beinahe vollständig durch den Rohrabschnitt 18 verschlossen ist. Am Ende des Rohrabschnitts 18 ist eine Ventilsitzfläche 30 ausgebildet, die mit einem Regelkörper 32 zusammenwirkt. Dieser Regelkörper 32 weist eine im Wesentlichen runde Form auf und bildet mit einem Befestigungsabschnitt 34 eine erste Klappe 36, die zur Regelung des Luftmassenstroms im Ansaugkanal 22 dient.

Die erste Klappe 36 ist auf einem Klappenkörper 38 einer als Abgasrückführventil dienenden zweiten Klappe 40 befestigt. Der Klappenkörper 38 ist auf einer Welle 42 befestigt, die an zwei zur Mittelachse 26 gegenüberliegenden Seiten des Abgasrückführkanalgehäuses 10 gelagert ist.

Diese Welle 42 ist derart angeordnet, dass sie den Abgasrückführkanal 24 und den Klappenkörper 38 bezüglich des Luftmassenstroms in die stromaufwärtige Hälfte 44 und eine stromabwärtige Hälfte 46 teilt.

Der Befestigungsabschnitt 34 ist im vorliegenden Ausführungsbeispiel mit einer ersten Fläche 48 am Klappenkörper 38 beispielsweise durch Schweißen befestigt. Von dieser ersten Fläche 48 aus erstreckt sich senkrecht ein Abstandshalteabschnitt 50, von dem aus sich wiederum ein Halteteil 52 parallel zur ersten Fläche 48 erstreckt. Dieses Halteteil 52 geht in den runden Regelkörper 32 der ersten Klappe 36 über.

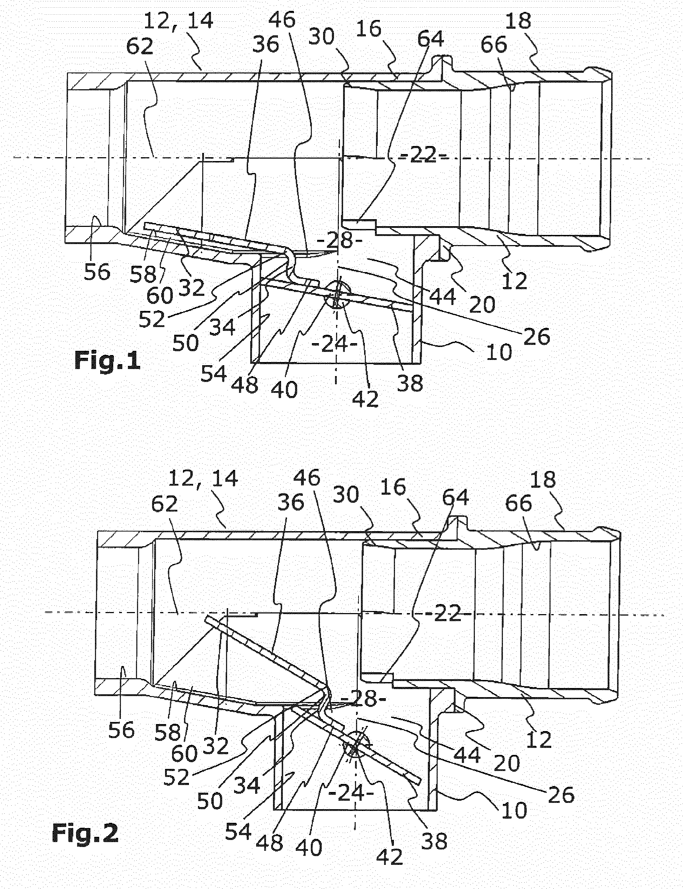

In Figur 1 ist die Stellung der Klappe 36, 40 dargestellt, in der der Abgasrückführkanal 24 vollständig geschlossen und der Ansaugkanal 22 vollständig geöffnet ist. In diesem Zustand liegt der Klappenkörper 38 mit seinem Außenumfang gegen eine Innenwand 54 des Abgasrückführkanalgehäuses 10 an. Der Klappenkörper 38 liegt jedoch nicht senkrecht zu den Innenwänden 54, sondern ist um 10° geneigt, das heißt er schließt zur Mittelachse 26 einen Winkel von 80° ein. Beim Öffnen der zweiten Klappe 40 werden durch dieses Anstellen des Klappenkörpers 38 kleinere Durchströmungsquerschnitte freigegeben, so dass eine genauere Regelung in diesem Bereich möglich ist.

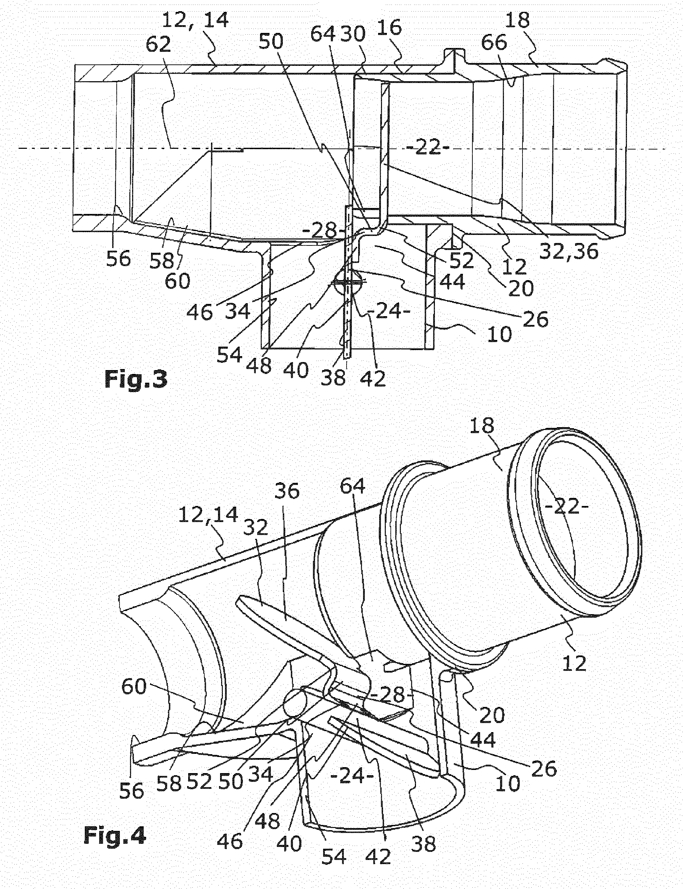

Der Regelkörper 32 der ersten Klappe 36 befindet sich in diesem Zustand etwa parallel mit geringem Abstand zu einer Gehäusewand 56 des Ansaugkanals 22 in einem bezüglich des Abgasrückführkanals 24 stromabwärtigen Wandabschnitt 58. Dieser Abschnitt 58 weist eine im Wesentlichen zum Regelkörper 32 identische Form auf, wie in Figur 4 zu erkennen ist, und dient als Tasche 60 zur Aufnahme dessen. Entsprechend ist die Gehäusewand 56 in diesem Abschnitt 58 zu einer Mittelachse 62 des Ansaugkanals 22 um 10° geneigt ausgebildet. Die so entstehende Oberfläche ist etwa in Verlängerung des Rohrabschnitts 18 ausgebildet, so dass Strömungsverluste relativ gering gehalten werden.

In Figur 2 ist ersichtlich, dass durch Drehung der zweiten Klappe 40 der zur Verfügung stehende Durchströmungsquerschnitt für den Abgasstrom zwischen der Innenwand 54 und dem Klappenkörper 38 langsam steigt. Beim dargestellten Winkel von etwa 65° zur Mittelachse 26 entfällt die begrenzende Innenwand 54 des Abgasrückführkanals 24 am stromabwärtigen Wandabschnitt 58 und der Klappenkörper wird teilweise in den Ansaugkanal 22 gedreht. Der entstehende zusätzlich zur Verfügung stehende Durchströmungsquerschnitt wächst bei Weiterdrehen der Klappe 40, da stetig größere Teile des Klappenkörpers 38 in den Ansaugkanal 22 ragen. Da jedoch bei diesen Drehwinkeln ein Weiterdrehen um einen bestimmten Drehwinkel eine deutlich geringere Änderung des Volumenstroms als bei kleinen Öffnungswinkeln zur Folge hat, bleibt eine gute Regelbarkeit erhalten.

In Figur 3 befindet sich die Klappen 36, 40 in ihrer zweiten Endposition. Während der Klappenkörper 38 parallel zur Mittelachse 26 des Abgasrückführkanals 24 angeordnet ist, ist der Regelkörper 32 in den Rohrabschnitt 18 eingetaucht und liegt senkrecht zur Mittelachse 62 des Ansaugkanals 22 an der Ventilsitzfläche 30 an. Um diese Drehung tatsächlich vollziehen zu können, ohne dass die erste Klappe 36 gegen den Rohrabschnitt 18 zuvor anschlägt, ist an dem Rohrabschnitt 18 am zum Abgasrückführkanal 24 weisenden Umfangsbereich eine Ausnehmung 64 ausgebildet, gegen deren Ende das Halteteil 52 des Befestigungsabschnitts 34 der ersten Klappe 36 in dieser Stellung anliegt.

Da der erste Klappenkörper 38 exzentrisch gelagert ist, kann durch eine entsprechende Ausformung einer Innenwand 66 des Rohrabschnittes 18 im Bereich der Ventilsitzfläche 30 eine sehr genaue Regelbarkeit des Luftmassenstroms durch die erste Klappe 36 erfolgen. Hierzu ist im vorliegenden Ausführungsbeispiel ein Radius im vom Abgasrückführkanal 24 weg weisenden Bereich der Innenwand 66 ausgebildet.

Die beschriebene Regelvorrichtung eignet sich somit zur sehr exakten Dosierung eines Abgasmassenstroms in einen Luftmassenstrom und zur exakten Regelung des Luftmassenstroms, indem die Lagerung in den Abgaskanal verschoben wird und der Luftstrom über eine entsprechende Ausformung der Innenwände oder durch entsprechende Klappenbiegungen vorgenommen werden kann. Es werden lediglich ein einziger Aktor und nur eine Lagerung für die Regelung beider Massenströme benötigt. Die Herstellung dieser Regelvorrichtung ist kostengünstig und montagefreundlich.

Es sollte deutlich sein, dass der Schutzbereich der vorliegenden Anmeldung nicht auf das beschriebene Ausführungsbeispiel beschränkt ist. Insbesondere sind verschiedene Modifikationen bezüglich des Zusammenbaus der Gehäuse und der beiden Klappen denkbar. Auch sollte klar sein, dass durch entsprechende Ausformung der Klappenkörper und der umgebenden Kanalwände verschiedene Kennlinien verwirklicht werden können. Durch diverse Biegungen der den Ansaugkanal beherrschenden Klappe kann auch der Luftmassenstrom wie gewünscht angepasst werden.

## Patentansprüche

1. Regelvorrichtung für eine Verbrennungskraftmaschine mit
einem Ansaugkanalgehäuse (12), in dem ein Ansaugkanal (22) ausgebildet ist, dessen Durchströmungsquerschnitt mittels einer ersten Klappe (36) regelbar ist,
einem Abgasrückführkanalgehäuse (10), in dem ein Abgasrückführkanal (24) ausgebildet ist, der in den Ansaugkanal (22) mündet und dessen Durchströmungsquerschnitt mittels einer zweiten Klappe (40) regelbar ist,
wobei die erste Klappe (36) und die zweite Klappe (40) miteinander verbunden um eine gemeinsame Drehachse drehbar gelagert sind, wobei die den Abgasrückführkanal (24) beherrschende zweite Klappe (40) im Abgasrückführkanalgehäuse (10) gelagert ist und einen Klappenkörper (38) und eine als Drehachse dienende Welle (42) aufweist, wobei die den Ansaugkanal (22) beherrschende erste Klappe (36) auf dem Klappenkörper (38) der zweiten Klappe (40) befestigt ist,
**dadurch gekennzeichnet, dass**
das Ansaugkanalgehäuse (12) einen Rohrabschnitt (18) aufweist,
der sich teilweise über die Mündung (28) des Abgasrückführkanals (24) erstreckt, wobei der Regelkörper (32) der ersten Klappe (36) zum Verschließen des Ansaugkanals (22) in den Rohrabschnitt (18) des Ansaugkanalgehäuses (12) eintaucht.

2. Regelvorrichtung für eine Verbrennungskraftmaschine nach Anspruch 1,
**dadurch gekennzeichnet, dass**
die erste Klappe (36) einen Regelkörper (32) zur Regelung des Durchströmungsquerschnitts des Ansaugkanals (22) und einen Befestigungsabschnitt (34) aufweist, über den der Regelkörper (32) beabstandet zum Klappenkörper (38) am Klappenkörper (38) befestigt ist.

3. Regelvorrichtung für eine Verbrennungskraftmaschine nach Anspruch 2,
**dadurch gekennzeichnet, dass**
sich der Regelkörper (32) im Wesentlichen parallel zum Klappenkörper (38) erstreckt.

4. Regelvorrichtung für eine Verbrennungskraftmaschine nach einem
der vorhergehenden Ansprüche,
**dadurch gekennzeichnet, dass**
der Klappenkörper (38) in der den Durchströmungsquerschnitt des Abgasrückführkanals (24) verschließenden Stellung einen Winkel von 75 bis 85° zu einer Mittelachse (26) des Abgasrückführkanals (24) einschließt.

5. Regelvorrichtung für eine Verbrennungskraftmaschine nach einem
der vorhergehenden Ansprüche,
**dadurch gekennzeichnet, dass**
ein zur Mündung (28) des Abgasrückführkanals (24) stromabwärtiger Wandabschnitt (58) des Ansaugkanalgehäuses (12) zu einer Mittelachse (62) des Ansaugkanals (22) einen Winkel von 5 bis 15° einschließt und derart ausgeformt ist, dass er eine Tasche (60) zur Aufnahme des Regelkörpers (32) der ersten Klappe (36) bei Verschluss des Abgasrückführkanals (24) bildet.

6. Regelvorrichtung für eine Verbrennungskraftmaschine nach einem
der vorhergehenden Ansprüche,
**dadurch gekennzeichnet, dass**
im Rohrabschnitt (18) am zum Abgasrückführkanal (24) weisenden Umfangsbereich eine Ausnehmung (64) ausgebildet ist, in der der Befestigungsabschnitt (34) im verschlossenen Zustand des Ansaugkanals (22) zumindest teilweise angeordnet ist.

7. Regelvorrichtung für eine Verbrennungskraftmaschine nach einem
der vorhergehenden Ansprüche,
**dadurch gekennzeichnet, dass**
die erste Klappe (36) und der Klappenkörper (38) der zweiten Klappe (40) einstückig hergestellt sind.

## Claims

1. Control device for an internal combustion engine, comprising:
an intake duct housing (12) in which an intake channel (22) is formed whose flow cross section is controllable by means of a first flap (36),
an exhaust gas recirculation duct housing (10) in which an exhaust gas recirculation channel (24) is formed that opens into the intake channel (22) and whose flow cross section is controllable by means of a second flap (40),
wherein the first flap (36) and the second flap (40) are connected with each other and are supported for rotation around a common rotary axis,
wherein the second flap (40) controlling the exhaust gas recirculation channel (24) is supported in the exhaust gas recirculation duct housing (10) and comprises a flap body (38) and a shaft (42) serving as a rotary axis, wherein the first flap (36) controlling the intake channel (22) is fastened on the flap body (38) of the second flap (40),
**characterized in that**
the intake duct housing (12) has a pipe section (18) that partially extends over the outlet (28) of the exhaust gas recirculation channel (24), wherein the control body (32) of the first flap (36) dips into the pipe section (18) of the intake duct housing (12) to close the intake channel (22).

2. Control device for an internal combustion engine of claim 1, **characterized in that** the first flap (36) has a control body (32) for controlling the flow cross section of the intake channel (22) and a fastening section (34) by which the control body (32) is fastened on the flap body (38) at a distance from the flap body (38).

3. Control device for an internal combustion engine of claim 2, **characterized in that** the control body (32) extends substantially in parallel with the flap body (38).

4. Control device for an internal combustion engine of one of the preceding claims, **characterized in that** in the position closing the flow cross section of the exhaust gas recirculation channel (24), the flap body (38) includes an angle of 75 to 85° with respect to a centre axis (26) of the exhaust gas recirculation channel (24).

5. Control device for an internal combustion engine of one of the preceding claims, **characterized in that** a wall section (58) of the intake duct housing (12), downstream with respect to the opening (28) of the exhaust gas recirculation channel (24), includes an angle of 5 to 15° with a centre axis (62) of the intake channel (22) and is designed such that it forms a pocket (60) for receiving the control body (32) of the first flap (36) when the exhaust gas recirculation channel (24) is closed.

6. Control device for an internal combustion engine of one of the preceding claims, **characterized in that** a recess (64) is formed in the pipe section (18) in the circumferential portion directed toward the exhaust gas recirculation channel (24), in which recess the fastening section (34) is arranged at least in part when the intake channel (22) is in the closed state.

7. Control device for an internal combustion engine of one of the preceding claims, **characterized in that** the first flap (36) and the flap body (38) of the second flap (40) are manufactured as one piece.

## Revendications

1. Dispositif de réglage pour un moteur à combustion interne, avec
un carter de conduit d'aspiration (12) dans lequel est formé un conduit d'aspiration (22) dont la section transversale d'écoulement est réglable par moyen d'un premier clapet (36),
un carter de conduit de recirculation de gaz d'échappement (10) dans lequel un conduit de recirculation de gaz d'échappement (24) est formé, qui s'ouvre dans le conduit d'aspiration (22) et dont la section transversale d'écoulement est réglable par moyen d'un deuxième clapet (40),
le premier clapet (36) et le deuxième clapet (40) étant connecté l'un à l'autre et supporté à rotation autour d'un axe rotatif commun,
le deuxième clapet (40) contrôlant le conduit de recirculation de gaz d'échappement (24) étant supporté dans le carter de conduit de recirculation de gaz d'échappement (10) et comportant un corps de clapet (38) et un arbre (42) servant comme axe rotatif, le premier clapet (36) contrôlant le conduit d'aspiration (22) étant monté sur le corps de clapet (38) dudit deuxième clapet (40),
**caractérisé en ce que**
ledit carter de conduit d'aspiration (12) a une section tubulaire (18) s'étendant en partie à travers l'ouverture (28) dudit conduit de recirculation de gaz d'échappement (24), un corps de réglage (32) du premier clapet (36) plongeant dans ladite section tubulaire (18) dudit carter de conduit d'aspiration (12) pour fermer ledit conduit d'aspiration (22).

2. Dispositif de réglage pour un moteur à combustion interne selon la revendication 1, **caractérisé en ce que** ledit premier clapet (36) comporte un corps de réglage (32) pour le réglage de la section transversale d'écoulement du conduit d'aspiration (22) et une section de montage (34) par laquelle ledit corps de réglage (32) est monté sur le corps de clapet (38) à distance du corps de clapet (38).

3. Dispositif de réglage pour un moteur à combustion interne selon la revendication 2, **caractérisé en ce que** ledit corps de réglage (32) s'étend sensiblement parallèlement au corps de clapet (38).

4. Dispositif de réglage pour un moteur à combustion interne selon l'une quelconque des revendications précédentes, **caractérisé en ce que** dans la position fermant la section transversale d'écoulement du conduit de recirculation de gaz d'échappement (24), le corps de clapet (38) forme un angle de 75 à 85° avec un axe central (26) d'écoulement du conduit de recirculation de gaz d'échappement (24).

5. Dispositif de réglage pour un moteur à combustion interne selon l'une quelconque des revendications précédentes, **caractérisé en ce qu'**une section de paroi (58) du carter de conduit d'aspiration (12) en aval de l'ouverture (28) du conduit de recirculation de gaz d'échappement (24) forme un angle de 5 à 15° avec un axe central (62) du conduit d'aspiration (22) et est formée de sorte qu'elle forme une poche (60) pour recevoir le corps de réglage (32) du premier clapet (36) lors de la fermeture du conduit de recirculation de gaz d'échappement (24).

6. Dispositif de réglage pour un moteur à combustion interne selon l'une quelconque des revendications précédentes, **caractérisé en ce qu'**un évidement (64) est formé dans la section tubulaire (18) dans la partie circonférentielle dirigée vers ledit conduit de recirculation de gaz d'échappement (24), évidement dans lequel est située au moins en partie la section de montage (34) dans l'état fermé du conduit d'aspiration (22).

7. Dispositif de réglage pour un moteur à combustion interne selon l'une quelconque des revendications précédentes, **caractérisé en ce que** le premier clapet (36) et le corps de clapet (38) du deuxième clapet (40) sont fabriqués en une pièce.
